Europäisches Patentamt

(19) European Patent Office

Office européen des brevets

(11) Veröffentlichungsnummer: **0 065 080 B1**

# (12) EUROPÄISCHE PATENTSCHRIFT

(45) Veröffentlichungstag der Patentschrift:
03.07.85

(21) Anmeldenummer: 82101724.1

(22) Anmeldetag: 05.03.82

(51) Int. Cl.⁴: **B 65 G 47/24,** B 65 G 37/02

(54) Transportsystem mit einer Förderbahn für Werkstücke bzw. Werkstückträger.

(30) Priorität: 09.05.81 DE 3118512

(43) Veröffentlichungstag der Anmeldung:
24.11.82 Patentblatt 82/47

(45) Bekanntmachung des Hinweises auf die Patenterteilung:
03.07.85 Patentblatt 85/27

(84) Benannte Vertragsstaaten:
**CH DE FR GB IT LI**

(56) Entgegenhaltungen:
**DE - B - 1 060 767**
**FR - A - 2 228 012**
**US - A - 1 899 337**
**US - A - 2 805 753**
**US - A - 3 432 023**

(73) Patentinhaber: **ROBERT BOSCH GMBH, Postfach 50,**
**D-7000 Stuttgart 1 (DE)**

(72) Erfinder: **Hecht, Dieter, Ing, grad., Königsseestrasse 20,**
**D-7000 Stuttgart 50 (DE)**
Erfinder: **Hieber, Ernst, Ing., grad., Stöckachstrasse 16,**
**D-7253 Renningen (DE)**
Erfinder: **Rösch, Arne, Dipl.-Ing., Schulstrasse 1,**
**D-8961 Haldenwang (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

*Stand der Technik*

Die Erfindung geht aus von einem Transportsystem nach der Gattung des Hauptanspruchs. Die Einrichtung zum Drehen der Werkstücke bzw. Werkstückträger ist erforderlich, wenn die Werkstücke von allen Seiten zugänglich sein sollen bzw. wenn die gleiche Montagelage der Werkstücke vor und hinter den Umlenkstationen in sogenannten Karreeumläufen vorhanden sein soll. Bei einem bekannten Transportsystem der gattungsmässigen Art (US-A-2 805 753) ist der Anschlag feststehend angeordnet und auf der dem Anschlag gegenüberliegenden Längsseite der Förderbahn eine Zwangsführung vorgesehen, die ein Abgleiten der Werkstücke bzw. der Werkstückträger vom Anschlag vor vollzogener Drehung verhindert. Die Zwangsführung benötigt zusätzliche Teile und einen gewissen Mehraufwand bei der Montage des Systems. Die Zwangsführung muss ausserdem sorgfältig auf die Form der Werkstücke bzw. Werkstückträger abgestimmt sein, damit die Teile sicher gedreht werden und nicht bereits in einer Zwischenstellung am Anschlag vorbeilaufen.

Die US-A-3 432 023 zeigt ein System, bei dem ein Anschlag während der Drehung durch den zu drehenden Gegenstand seitlich verschwenkt wird; er bildet somit kein festes Drehlager im Sinne der Erfindung.

*Vorteile der Erfindung*

Die erfindungsgemässe Anordnung mit den kennzeichnenden Merkmalen des Hauptanspruchs hat demgegenüber den Vorteil, dass der Ablauf der Drehung beschleunigt und die auf der Förderbahn bis zur vollendeten Drehung zurückgelegte Wegstrecke verkürzt werden kann. Die zu drehenden Teile werden formschlüssig am Anschlag festgehalten, so dass ein Vorbeilaufen der Teile am Anschlag mit Sicherheit vermieden wird. Die Anordnung ist zwar wegen der Notwendigkeit eines Stellantriebs für den Anschlag etwas aufwendiger als die vorbeschriebene Anordnung mit Festanschlag, jedoch fallen die zusätzlichen Mittel für die Zwangsführung der zu drehenden Werkstücke bzw. Werkstückträger weg.

Der Anschlag kann beispielsweise ein Bolzen sein, welcher in einen Schlitz des zu drehenden Werkstücks oder Werkstückträgers eingreift. Eine Ausführung mit geringer Neigung zum Klemmen ergibt sich, wenn der Anschlag als ein in die Bewegungsbahn der Teile hineinschwenkbarer Fanghaken ausgebildet ist. In diesem Fall kann das Gegenstück an dem zu drehenden Teil ein einfacher Bolzen sein.

Eine einfache Ausführung des Anschlags und seines Stellantriebes ergibt sich durch die Merkmale des Anspruchs 3. Bei einer Ausführung gemäss Anspruch 4 lässt sich der Stellantrieb in einem besonders geringen Abstand neben und parallel zur Förderbahn anordnen.

Die Förderbahn selbst kann jeden geeigneten und bewährten Aufbau haben, sofern nur die Werkstücke bzw. Werkstückträger durch Reibungsschluss fortbewegt werden. Als besonders vorteilhaft hat sich eine Förderbahn erwiesen, die als Doppelgutförderer mit zwei im Abstand parallel zueinander laufenden Fördergurten ausgebildet ist.

*Zeichnung*

Zwei Ausführungsbeispiele der Erfindung sind in der Zeichnung dargestellt und in der nachfolgenden Beschreibung näher erläutert. Es zeigen

Fig. 1 das erste Ausführungsbeispiel und

Fig. 2 die Einrichtung zum Drehen der Werkstückträger nach dem zweiten Ausführungsbeispiel.

*Beschreibung der Ausführungsbeispiele*

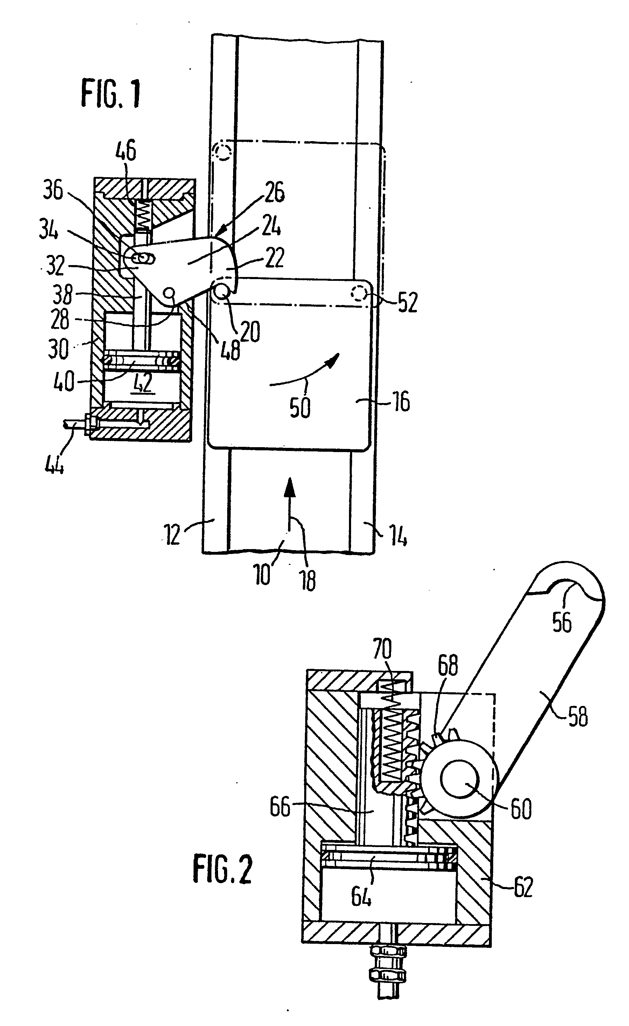

Das Ausführungsbeispiel nach Fig. 1 hat eine Förderbahn 10 mit zwei endlosen Gurten 12, 14, auf denen Werkstückträger 16 in Richtung des Pfeiles 18 transportiert werden. Jeder Werkstückträger 16 hat einen nach oben abstehenden Bolzen 20, in dessen Bewegungsbahn ein als Fanghaken ausgebildeter Anschlag 22 eingeschwenkt werden kann. Der Anschlag 22 ist an dem einen Arm 24 eines doppelarmigen Hebels 26 gebildet, der bei 28 im Gehäuse eines Arbeitszylinders 30 parallel zur Förderbahnebene schwenkbar gelagert ist. Der andere Arm 32 des Hebels 26 hat einen Querschlitz 34, in den ein Stift 36 eingreift, welcher an einer Kolbenstange 38 eines im Arbeitszylinder 30 beweglichen Kolbens 40 befestigt ist. Dieser begrenzt eine Arbeitskammer 42, die über eine Leitung 44 gesteuert mit Druckmittel gefüllt und auch entleert werden kann.

Das in die Arbeitskammer 42 eingeführte Druckmittel verschiebt den Kolben 40 samt Kolbenstange 38 entgegen der Kraft einer Rückführfeder 46 nach der in der Zeichnung obenliegenden Seite, wobei der Hebel 26 im Uhrzeigersinn verschwenkt wird. Die Endstellung der Teile ist erreicht, wenn der Hebel 26, wie in der Zeichnung dargestellt, an einer Sperrschulter 48 anschlägt. In dieser Stellung ist der Anschlag 22 in die Bewegungsbahn des Bolzens 20 am Werkstückträger 16 eingeschwenkt. Ein ankommender Werkstückträger 16 fängt sich an dem Anschlag 22 und wird danach durch den Schub der weiterlaufenden Gurte 12, 14 in Richtung des Pfeiles 50 entgegen dem Uhrzeigersinn geschwenkt. Wenn der Werkstückträger 16 eine Drehung um 90° vollführt und die mit strichpunktierten Linien angedeutete Stellung erreicht hat, wird über eine nicht dargestellte Steuereinrichtung der Druck in der Arbeitskammer 42 abgebaut, so dass die Rückführfeder 46 den Kolben 40 zurückführen und den Hebel 26 entgegen dem Uhrzeigersinn in eine den Bolzen 20 freigebende Stellung verschwenken kann. Soll der Werkstückträger 16 insgesamt um 180° geschwenkt werden, so ist am Werkstückträger 16 ein bei 52 angedeuteter weiterer Bolzen vorzusehen und der dargestellten Wendeeinrichtung eine zweite, gleichwirkende Einrichtung nachzuschalten.

Bei der Variante nach Fig. 2 ist ein ausschwenkbarer Anschlag 56 am freien Ende eines einarmigen Hebels 58 gebildet, der auf einer Welle 60 befestigt ist, die drehbar im Gehäuse eines Arbeitszylinders 62 gelagert ist. In diesem ist ein druckmittelbeaufschlagter Kolben 64 beweglich, der mit einer Zahnstange 66 verbunden ist, welche in ein mit der Welle 60 fest verbundenes Zahnritzel 68 eingreift. Bei Druckbeaufschlagung des Kolbens 64 werden die Teile in die in Fig. 2 gezeigte Arbeitsstellung überführt und der Anschlag 56 in die Arbeitsstellung geschwenkt. Das Zurückschwenken des Anschlags 56 in eine den Durchlauf bzw. Weiterlauf des Werkstückträgers nicht mehr behindernde Stellung erfolgt durch eine Rückführfeder 70, welche über die Zahnstange 66 auf den Kolben 64 einwirkt.

**Patentansprüche**

1. Transportsystem mit einer Förderbahn für Werkstücke bzw. Werkstückträger (Teile 16), die auf den beweglichen Förderelementen (12, 14) der Förderbahn reibungsschlüssig aufliegen, und mit einer Einrichtung zum Drehen der Teile (16) auf der Förderbahn um eine senkrecht auf der Bahnebene stehende feste Achse, welche einen in die Bewegungsbahn der Teile (16) hineinragenden Anschlag (22, 56) hat, dessen Reaktionskraft in Zusammenwirken mit der von den sich weiterbewegenden Förderelementen (12, 14) ausgeübten Schubkraft ein Drehmoment auf die Teile (16) ausübt, welches deren Drehung auf der Förderbahn (10) einleitet und zumindest über einen Teilbereich des gewünschten Drehwinkels erzwingt, dadurch gekennzeichnet, dass der in die Bewegungsbahn der zu drehenden Teile hineinragende Anschlag (22, 56) als Drehlager für die Teile ausgebildet ist, welches unter der Einwirkung der Schubkraft der weiterlaufenden Förderelemente (12, 14) eine Drehung der Teile um seine Lagerachse erzwingt, und dass der Anschlag (22, 56) einen gesteuerten Stellantrieb (40, 46 186 bzw. 64, 70) hat, welcher nach vollendeter Drehung der Teile den Anschlag (22, 56) aus deren Bewegungsbahn entfernt.

2. Transportsystem nach Anspruch 1, dadurch gekennzeichnet, dass der Anschlag als ein in die Bewegungsbahn der Teile (16) hineinschwenkbarer Fanghaken (22, 56) ausgebildet ist.

3. Transportsystem nach Anspruch 2, dadurch gekennzeichnet, dass der Fanghaken (22) durch den einen Arm (24) eines doppelarmigen Hebels (26) gebildet ist, an dessen zweitem Arm (32) der Stellantrieb (40, 46) angreift.

4. Transportsystem nach Anspruch 2, dadurch gekennzeichnet, dass der Fanghaken (56) am freien Ende eines einarmigen Hebels (58) gebildet ist und der Stellantrieb (64, 70) vorzugsweise über ein Zahnstangengetriebe (66, 68) auf die Welle (60) des Hebels (58) einwirkt.

**Claims**

1. Transport system comprising a conveying track for workpieces or workpiece carriers (parts 16) which rest with friction contact on the movable conveying elements (12, 14) of the conveying track, and comprising a device for rotating the parts (16) on the conveying track about a fixed shaft which is standing perpendicularly on the plane of the track and which has a stop (22, 56) which projects into the path of the movement of the parts (16), the reaction force of which stop, in co-operation with the shear force exerted by the conveying elements (12, 14), which are continuing to move, exerts a torque on the parts (16) which initiates and, at least over a part area of the desired angle of rotation forces their rotation on the conveying track (10), characterised in that the stop (22, 56), which projects into the path of the movement of the parts to be rotated, is constructed as a rotary bearing for the parts, which bearing forces, under the action of the shear force of the conveying elements (12, 14) which continue to move, a rotation of the parts about its bearing axis and that the stop (22, 56) has a controlled actuating drive (40, 46 186 and 64, 70) which, after completed rotation of the parts, removes the stop (22, 56) out of the path of their movement.

2. Transport system according to Claim 1, characterised in that the stop is constructed as a catch hook (22, 56) which can be swivelled into the path of the movement of the parts (16).

3. Transport system according to Claim 2, characterised in that the catch hook (22) is formed by one arm (24) of a double-armed lever (26), the second arm (32) of which is engaged by the actuating drive (40, 46).

4. Transport system according to Claim 2, characterised in that the catch hook (56) is formed at the free end of a single-armed lever (58) and the actuating drive (64, 70) acts, preferably via a rack gear (66, 68), on the shaft (60) of the lever (58).

**Revendications**

1. Système de transport avec une voie de transport pour des pièces à travailler ou des porte-pièces (parties 16) qui repose en étant maintenu par frottement sur les éléments mobiles de transport (12, 14) de la voie de transport, et avec un dispositif pour faire pivoter les parties (16) sur la voie de transport autour d'un axe fixe perpendiculaire au plan de la voie de transport et qui comporte une butée (22, 56) faisant saillie à l'intérieur du trajet de déplacement des parties (6), butée dont la réaction, en coopération avec l'effort de poussée exercé par les éléments de transport (12, 14) continuant leur déplacement, exerce sur les parties (16) un couple qui déclenche la rotation de ces parties sur la voie de transport (10) et assure impérativement cette rotation au moins sur une partie de l'angle de rotation souhaitée, système caractérisé en ce que la butée (22, 56) faisant saillie dans le trajet de déplacement des parties à faire pivoter, revêt la forme d'un palier de rotation pour ces parties, ce palier assurant impérativement une rotation des parties autour de son axe sous l'action de l'effort de poussée des éléments de transport (12, 14) continuant leur course, et en ce que cette butée (22, 56) comporte un entraînement commandé (40, 46, 186 ou bien 64, 70) qui, lorsque la rotation des parties est terminée, éloigne cette butée (22, 56) de leur trajet de déplacement.

2. Système de transport selon la revendication 1, caractérisé en ce que la butée revêt la forme d'un crochet de prise (22, 56) susceptible de pivoter dans le trajet de déplacement des parties (16).

3. Système de transport selon la revendication 2, caractérisé en ce que le crochet de prise (22) est constitué par l'un des bras (24) d'un levier (26) à deux bras, sur le deuxième bras (32) duquel agit l'entraînement (40, 46).

4. Système de transport selon la revendication 2, caractérisé en ce que le crochet de prise (56) est prévu à l'extrémité libre d'un levier (58) à un seul bras, l'entraînement (64, 70) agissant sur l'arbre (60) de ce levier (58) de préférence par l'intermédiaire d'un mécanisme à crémaillère (66, 68).

FIG. 1

FIG. 2